# EUROPEAN PATENT SPECIFICATION

(11) **EP 2 831 483 B1**
(45) Date of publication and mention of the grant of the patent: **23.05.2018**
(21) Application number: 13717707.7
(22) Date of filing: 28.03.2013
(51) Int. Cl.: F16L 37/02, B65D 39/14, G01M 3/02

(54) **SEALED COUPLING DEVICE**
ABGEDICHTETE KOPPLUNGSVORRICHTUNG
DISPOSITIF D'ACCOUPLEMENT ÉTANCHE

(30) Priority: 30.03.2012 IT BO20120174
(43) Date of publication of application: 04.02.2015
(73) Proprietor: Helium Technology S.r.l., 40010 Bentivoglio (BO) (IT)
(72) Inventor: VAI, Riccardo, I-27022 Casorate Primo (PV) (IT)
(86) International application number: PCT/EP2013/000946
(87) International publication number: WO 2013/143703

(56) References cited:
- EP-A1- 0 690 465
- DE-A1- 2 253 343
- US-A- 3 750 822
- US-A- 4 602 500

## Description

### Technical field

The present invention relates to a sealed coupling device adapted to be connected to a component to be checked and to seal a substantially cylindrical surface of the component, the sealed coupling device including a hollow body with an opening defining a longitudinal geometric axis, an elongate element at least partially housed in the opening and adapted to perform axial movements with respect to the hollow body, the elongate element defining an axial through hole being part of conduits for the passage of a fluid to the component to be checked, a sealing element adapted to cooperate with the substantially cylindrical surface of the component to be checked and arranged between two stop surfaces which are axially movable with respect to each other with the elongate element and the hollow body, respectively, a thrust element adapted to apply an axial resisting thrust between the hollow body and the elongate element, one or more stationary reference surfaces integral with the hollow body and one or more movable reference surfaces integral with the elongate element, the one or more stationary reference surfaces and the one or more movable reference surfaces being adapted to mutually cooperate under the action of the axial resisting thrust in order to define at least one axial reference position of the elongate element with respect to the hollow body, an actuating mechanism that can be operated from the outside of the hollow body for transmitting an axial actuating thrust between the elongate element and the hollow body, the actuating thrust featuring an opposite sense with respect to the axial resisting thrust.

A sealed coupling device according to the invention can be used in test machineries to perform seal tests on components, in particular to introduce a tracer gas, for example helium, inside the component the seal of which has to be checked.

### Background art

Closing devices for containers including an actuating mechanism to compress a sealing element so that it engages the container wall and sealingly closes the container are known, for example, from patent No. US 3750822.

There are also known coupling devices to sealingly connect a pipe to be checked to a checking system. For example, German application published under No. 2253343 discloses a device comprising a cylindrical body with a movable piston which is partially housed in the cylindrical body and is provided with a rod including a gasket and spreading elements. Such elements include surfaces which mutually engage to fasten the device to the internal walls of the pipe to be checked.

It is known to use sealed coupling devices, or couplings, in automatic test machineries to perform seal tests on components to detect the presence of leaks. In this kind of tests, the component to be checked is introduced, for example, in a vacuum chamber and is pressurized with a tracer gas through one of said couplings. By means of a mass spectrometer the presence of the tracer gas inside the vacuum chamber is detected; such presence is indicative of possible leaks in the component.

These test machineries are used in different sectors. For example in the automotive to perform tests on radiators or fuel tanks, in the food sector to test vessels or in the refrigeration field to test, for example, radiators of air-conditioning systems.

The coupling devices, or couplings, are mounted in an opening of the component to be checked and include resilient sealing means which expand radially, under compression, and engage the opening wall to form the seal. The sealing means are compressed by one or more parts of the coupling that are displaced pneumatically, by introducing a pressure fluid inside the coupling, or mechanically by means of levers or handles, which are operated manually by an operator or automatically by robots or by means of mechanical handling means.

The patent No. US4225159 describes a coupling device for smooth surface pipes forming the seal at an internal section of the pipe. Such a device includes a substantially cylindrical body which partially houses a shaft that slides longitudinally. One shaft end protruding from the body is pivoted to a mechanism with a locking/unlocking lever with a cam surface which is kept urged against an external surface of the body.

The other shaft end has sealing means arranged between two abutment surfaces and is inserted into the pipe when the locking/unlocking lever is in a first control position. Then, the lever is actuated, in particular it is rotated to move to a second control position, and the shaft, together with the sealing means arranged at its end, is consequently retracted towards the upper part of the body, while the body is urged in the opposite sense. This way the sealing means are compressed, expand and engage the internal surface of the pipe to form the seal. To remove the seal it is necessary to rotate the lever again and bring it to the initial position.

A device like the one described in the patent No. US4225159, but forming the seal at the external surface of a pipe to be checked, is disclosed in the patent No. US4326407. In this case too, there are sealing means which are compressed and expanded by means of a rotating lever that is associated with a shaft which can translate inside a substantially cylindrical body.

In this type of known couplings, automating the forming and the removal of the seal, for example in production lines employing robots, is very difficult because it is necessary to perform rotation movements to operate the levers. Moreover, the movements to form and the ones to remove the seal are not the same. Consequently, it is essential to known how the device is positioned around its own axis. Also the patent No. FR2855237 discloses a sealed connecting or closing device that forms the seal through the expansion of sealing means engaging the surfaces of a conduit to be checked, but it doesn't include internal mechanisms for forming, maintaining and removing the seal. Such a device comprises a casing with a slide and a sliding rod carrying at one end an abutment surface and a resilient element to form the seal with the internal surfaces of the conduit to be checked. A first translation movement of the whole device, manually operated by an operator or by means of an external, automated mechanism, is needed to bring the rod end carrying the resilient element to fit into the conduit to be checked up to the stop of the casing against suitable stationary abutments. Following the stop of the casing, a second translation movement displaces only the slide and causes the compression of the resilient element to form the seal with the internal surface of the conduit. The disclosed device does not include elements for locking and unlocking the sealing configuration and it is thus necessary for the operator to maintain the thrust action until the sealing action is no more necessary, or alternatively, for the external, automated mechanism to maintain such thrust action and to remove it, for example, following a separate control. However, when using external mechanisms, for example automated, for forming, maintaining and removing the seal, it is necessary to integrate such mechanisms to the connecting or closing device in a substantially permanent way. This gives rise to a very articulated and bulky structure which is complex to operate and displace, and is thus at least difficult, even impossible, to be used in applications with overall dimensions and/or cost limits.

In general, the seal actuating and locking/unlocking systems of the known mechanically actuated couplings, including automated, external mechanisms or, if integrated, levers or handles, increase the overall dimensions of the device, thus limiting the possibilities of employment.

### Disclosure of the invention

Object of the present invention is to provide a sealed coupling device which overcomes the above-mentioned inconveniences and, in particular, can be actuated in a simpler way, can be easily automated and has limited overall dimensions.

This and other objects are achieved by a sealed coupling device as defined in claim 1.

The sealed coupling device, or coupling, according to the present invention can be very easily operated, has a more compact structure than the known devices which have an integrated, mechanical seal locking and unlocking system, and ensures a remarkable flexibility in use.

The change of state of the coupling, that is the transition from a non-operative condition where there is no seal to an operative condition where there is a sealed connection, and vice versa, is achieved by applying the same movement, that is to say an axial thrust applied to one end of the coupling. Thanks to the mutual cooperation of abutment surfaces included in the actuating mechanism and to the arrangement of stationary and movable reference surfaces, the axial thrust applied to the device alternatively causes the forming and the removal of the sealed connection.

The movement which is necessary to actuate the mechanism is extremely simple and can be easily automated and operated by a robot, thus overcoming the problems of the known solutions.

Moreover, as the seal actuating and locking/unlocking mechanism is entirely positioned inside the coupling, the overall dimensions are considerably reduced in comparison with the known devices.

### Brief description of the Drawings

The present invention is hereinafter described with reference to the attached sheets of drawings given by way of non-limiting examples, wherein:
- figure 1 is a longitudinal section showing a sealed coupling device in a non-operative condition according to a first embodiment of the invention;
- figure 2 is a longitudinal section showing the sealed coupling device of figure 1 in an operative condition;
- figure 3 is an enlarged scale, perspective view of a component of the sealed coupling device of figure 1;
- figure 4 is a bottom view of the component of figure 3;
- figure 5 is an enlarged scale, perspective view of a different component of the sealed coupling device of figure 1;
- figures 6A and 6B are enlarged scale, perspective views of another, substantially cylindrical shaped, component of the sealed coupling device of figure 1, where the upper base and the lower base are visible, respectively;
- figure 7 is a top view of the component of figures 6A and 6B;
- figure 8 is a transversal section of the component of figures 6A, 6B and 7, taken along line VIII-VIII of figure 7, said section being 90 degrees rotated on the plane of the figure;
- figure 9 is a perspective view of a sealed coupling device according to a further embodiment of the invention.

### Best Mode for Carrying Out the Invention

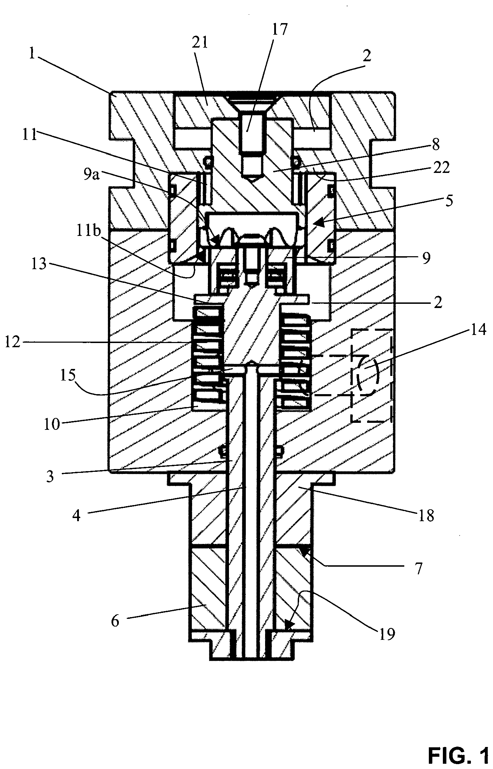

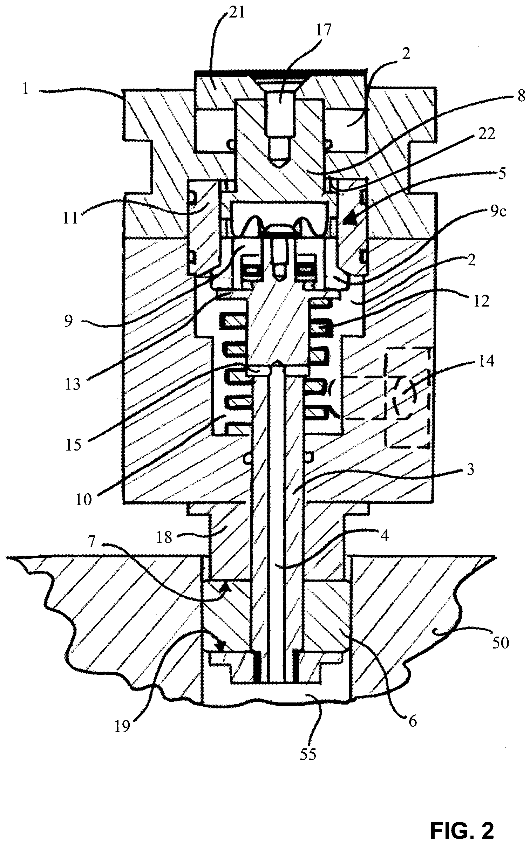

The longitudinal sections of figures 1 and 2 show a preferred embodiment of a sealed coupling device, or coupling, according to the invention, including a hollow, cylindrical-shaped body 1 with a central opening 2 which defines a longitudinal, geometric axis and has variable diameter section. The hollow body 1 shown in the figures is subdivided into an upper body and a lower body, according to the orientation of the figure, which are fixed to each other by means of fastening means, for example screws (in a known way and not shown in the figures).

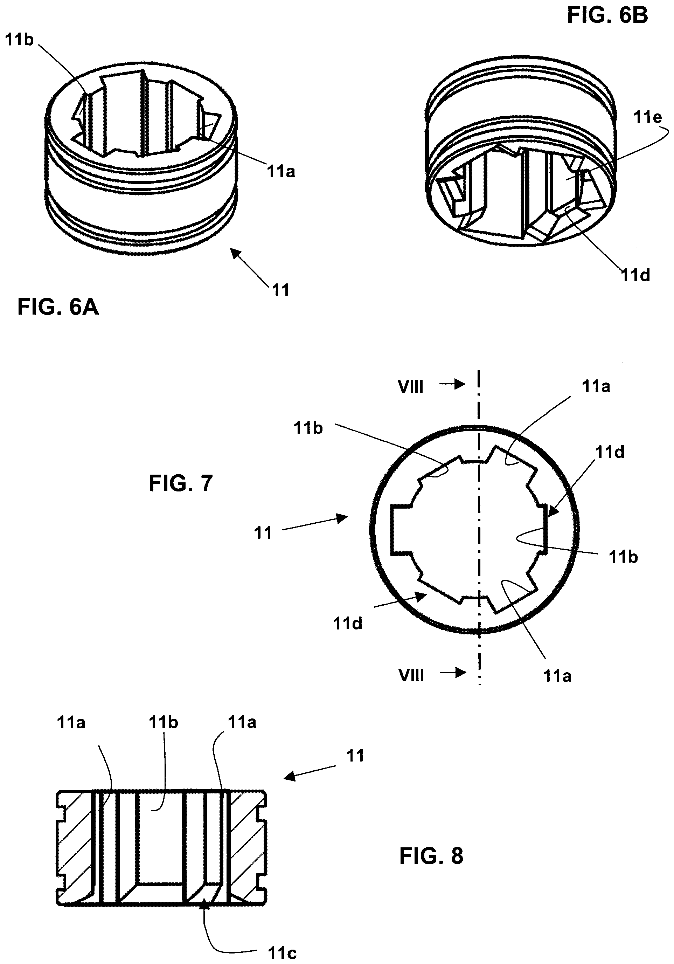

A substantially annular-shaped stationary element 11, also visible in the figures from 6A to 8, is housed in the central opening 2 and is fixed to the hollow body 1. At a substantially cylindrical-shaped internal wall, the stationary element 11 includes longitudinal guide surfaces defining longitudinal grooves 11a, 11b with variable depth, oblique leading surfaces 11c, at an open end or entrance of the grooves 11a, 11b, and one or more stationary reference surfaces 11d arranged in a radial defined position around the longitudinal axis and including at least one transverse portion that is transversal, for example perpendicular, with respect to the longitudinal axis. In particular, the stationary reference surfaces 11d are defined at, or near, the entrance of some grooves 11b - at least one - which have at least a part having reduced depth, and are hereinafter called shallow grooves. More specifically, the stationary reference surfaces 11d delimit guide sections 11e, as shown in figure 6B. The other longitudinal grooves 11a - hereinafter called deep grooves - have a greater depth and are arranged at alternates angular positions with respect to the shallow grooves 11b. According to a preferred embodiment shown in the figures, the longitudinal guide surfaces define six longitudinal grooves 11a, 11b - three of which (shallow grooves 11b) have a reduced depth in comparison with the others (deep grooves 11a) - which are symmetrically arranged around the longitudinal axis in such a way that the different depths are alternate. The stationary reference surfaces 11d are defined at one end of the shallow grooves 11b. The radial extent of the transverse portion of the stationary reference surfaces 11d substantially corresponds to the depth difference between the deep grooves 11a and the shallow grooves 11b.

An elongate element 3, or rod, is partially arranged in the central opening 2 of the hollow body 1 and protrudes from a lower end (according to the orientation of figures 1 and 2) of said hollow body 1. The rod 3 can perform rotation movements about the longitudinal axis, by virtue of which it can take different angular positions with respect to the hollow body 1, and axial movements along the longitudinal axis. Such axial movements are advance movements when the rod 3 moves downward, according to the orientation shown in figures 1 and 2, and retraction movements when the rod 3 performs a movement in a sense opposite to the advance movement, that is toward the upper end of the hollow body 1.

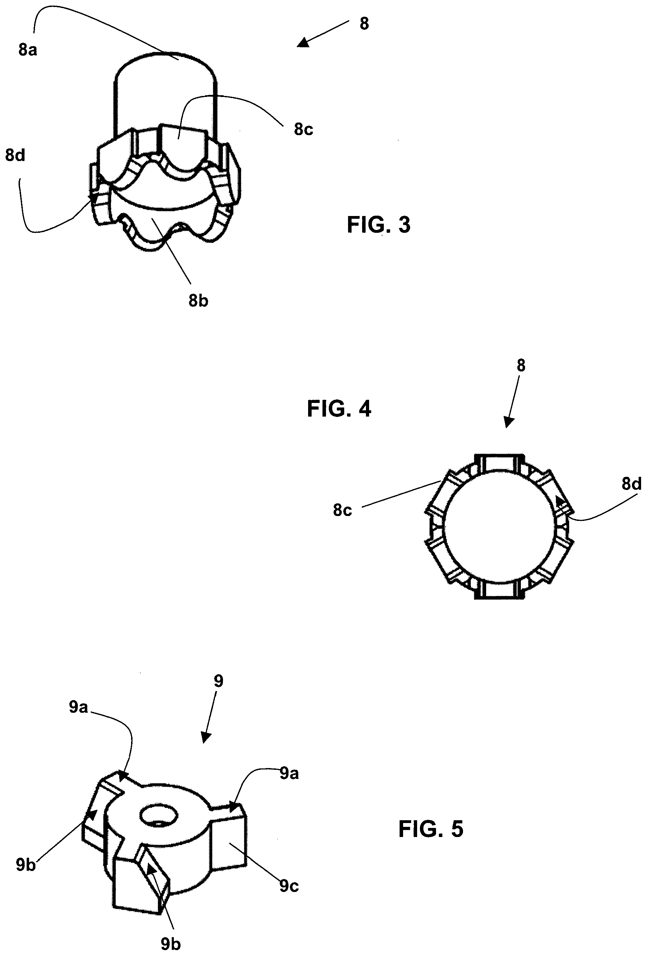

A rotating element 9, also visible in figure 5, is housed in the central opening 2, is rigidly connected to the end of the rod 3 inside the hollow body 1 and is integral with the latter in both the axial movements and the rotation movements. Such rotating element 9 defines on the external surface one or more movable reference surfaces 9a with a transverse extent and arranged in a defined radial position around the longitudinal axis. More particularly, the rotating element includes at least one radial element 9c, integral with it and defining at a wall, opposite to the one facing the rod 3, one of said one or more movable reference surfaces 9a.

In the preferred embodiment shown in figure 5, the radial elements 9c, and thus the movable reference surface 9a, are three and are symmetrically arranged around the longitudinal axis.

The radial elements 9c of the rotating element 9 and the stationary reference surfaces 11d of the hollow body 1 cooperate with one another in the operation of the device according to the invention. In particular, the movable reference surfaces 9a and the stationary reference surfaces 11d cooperate at defined mutual angular positions between the rod 3 and the hollow body 1 in order to define mutual axial reference positions, as it will be hereinafter described in detail.

In the device according to the invention, there is also an actuating mechanism 5, which can be operated from the outside of the hollow body 1 and includes a control element 8 which can axially move along the longitudinal axis and is shown also in figures 3 and 4. It has a first end 8a which can be reached from the outside of the hollow body 1, for example through the opening 2, and a second end 8b facing the rotating element 9. The control element 8 can receive an axial actuating thrust, which is manually applied by an operator or automatically by a robot, and causes an axial movement of the control element 8 which is transmitted to the rotating element 9.

In the embodiment shown in figures 1 and 2, a cylindrical flat element 21, such as a washer, is connected to the control element 8 by means of a screw. The axial actuating thrust is applied at such washer 21 and is transmitted to the control element 8.

The actuating mechanism 5 further includes abutment surfaces 8d, 9b which are in part integral with the control element 8 and defined as first abutment surfaces 8d, and in part integral with the rotating element 9, and thus with the rod 3, and defined as second abutment surfaces 9b. The abutment surfaces 8d,9b are shaped so as to cause, when the axial actuating thrust is applied, rotation movements of the rotating element 9, and of the rod 3 integral with it, and to change the angular position of such rotating element 9 with respect to the hollow body 1.

According to a preferred embodiment of the actuating mechanism 5, the control element 8 is cylindrically-shaped and includes, at the second end 8b, protruding portions 8c, which protrude in a radial direction and engage the grooves 11a, 11b of the stationary element 11, and, at the lower end of said protruding portions 8c, shaped abutment surfaces 8d, in particular with a curve or sloping profile, which engage the abutment surfaces 9b defined by the rotating element 9. In the embodiment shown in figures 3 and 4, the protruding portions 8c are six, have the same dimensions and extent, and are symmetrically arranged around the longitudinal axis.

Figure 5 shows a preferred embodiment of the rotating element 9 where each radial element 9c has, at the part engaging the shaped abutment surfaces 8d of the control element 8, sloping abutment surfaces 9b, or more specifically abutment surfaces with portions sloping with respect to the longitudinal axis. Such sloping abutment surfaces 9b are placed near the movable reference surfaces 9a and are substantially contiguous to them on the external surface of the protruding elements 9c.

A thrust element 12, in particular a compression spring, is arranged around the rod 3 in a part of the central opening 2 that defines an axial cavity 10. The spring 12 acts between a transverse wall of said cavity 10 and a flange 13 integral with the rod 3 by applying an axial resisting thrust between the rod 3 and the hollow body 1 which causes retraction movements of the rod 3.

Outside the hollow body 1, at the portion of the rod 3 protruding from the hollow body 1, there is a sealing element 6, or gasket, made of elastic material and annular shaped, which is arranged around the rod 3 and is placed between two stop surfaces 7, 19 which can axially move with respect to each other with the elongate element 3 and the hollow body 1. In the embodiment shown in figures 1 and 2, a first stop surface 7 is integral with the hollow body 1, while a second stop surface 19 is fixed to the rod 3 and can move with it. More particularly, the first stop surface 7 is defined by a spacer element 18 that is integrally connected to the hollow body 1 through which the rod 3 passes, and the second stop surface 19 is defined by a stationary element, for example a nut, fixed to the lower end of the rod 3.

Both the stop surfaces 7, 19 can also be integral with the hollow body 1 and the rod 3, respectively. The spacer element 18 arranged between the gasket 6 and the lower end of the hollow body 1 can be, for example, omitted. In that case, the first stop surface 7 for the gasket 6 is defined by the lower end of the hollow body 1.

In the preferred embodiment shown in figures 1 and 2, the coupling comprises conduits for the passage of a fluid, more specifically conduits to introduce a pressure, test gas, for example helium, into a component 50 to be checked through a functional opening 55. A part of the component 50 - for example a car radiator - and a part of the relative functional opening 55 are shown very schematically in figure 2. The conduits include an inlet hole 14 in the hollow body 1, through which the gas is inserted. The inlet hole 14 is radially arranged and connects the outside to the axial opening 2, more specifically to the cavity 10 where the spring 12 is housed. The rod 3 defines an axial through hole 4 which has one end communicating with the axial opening 2, more specifically to the cavity 10 (through radial openings 15 formed in the rod 3 itself) and the other end communicating with the component 50 to be checked. In the central opening 2 there is also a gasket, or O-ring, not shown in the figure, to seal the internal part of the central opening 2 comprising the cavity 10.

It is now described in detail how the actuating mechanism operates and how the seal is formed, maintained and removed in the component 50 to be checked.

As previously stated, the stationary reference surfaces 11d of the stationary element 11 and the movable reference surfaces 9a of the rotating element 9 cooperate with each other at defined angular positions taken by the rod 3 with respect to the hollow body 1. The arrangement of the stationary and movable reference surfaces, and thus their mutual cooperation is such as to define, under the action of the spring 12, at least one axial reference position of the rod 3 with respect to the hollow body 1. More particularly, the mutual cooperation between the stationary reference surfaces 11d and the movable reference surfaces 9a, which are urged against each other by the spring 12, defines an axially advanced position of the rod 3 with respect to the hollow body 1. In this position the sealing element 6 is not compressed, or is only slightly compressed, between the two stop surfaces 7, 19 and no sealed connection is formed. With reference to the preferred embodiment, the stationary reference surfaces 11d (three surfaces, symmetrically arranged with respect to the longitudinal axis) include portions transverse to the longitudinal axis, and the axially advanced position of the rod 3 with respect to the hollow body 1 is defined by the mutual cooperation between the movable reference surfaces 9a of the rotating element 9 and such transverse portions of the stationary reference surfaces 11d.

The rod 3 takes a further axial reference position, defined as axially retracted position, in which the sealing element 6 is compressed, radially expands and sealingly engages the substantially cylindrical surface of the functional opening 55 of the component 50 to be checked (figure 2). Such axially retracted position can be defined for example, under the thrust of the spring 12, by the maximum expansion the sealing element 6 can reach inside the functional opening 55, or by the maximum compression of the sealing element 6 itself, or by mechanical abutments formed by internal elements of the coupling. In particular, according to the preferred embodiment of the invention, the axially retracted position is defined by the abutment between portions of the sloping abutment surface 9b, urged by the spring 12, and the shaped surface 8d in an angular position of the rod 3 at which the protruding elements 9c are housed and slide in the deep grooves 11a and the control element 8 is at the upper limit of its stroke (in the orientation of figure 2 and according to its configuration). Said axially advanced position and said axially retracted position correspond to a non-operative condition (in which there is no seal or the seal is removed) and to an operative condition (in which the seal is formed) of the coupling, respectively.

The spring 12 housed in the cavity 10 inside the hollow body 1 applies an axial resisting thrust between the rod 3 and the hollow body 1. More specifically, the axial resisting thrust applied by the spring 12 maintains, if there is no interference from the outside, the axial reference position, which can be the axially retracted position or the axially advanced position, of the rod 3 with respect to the hollow body 1.

The transition of the rod 3 from the axially advanced position to the axially retracted position, and vice versa, occurs due to the presence of the abutment surfaces 8d, 9b, integral with the control element 8 and with the rotating element 9, respectively, which are shaped in such a way that the axial actuating thrust applied at the end 8a of the control element 8 applies a momentum between the rotating element 9 (and thus the rod 3 connected thereto) and the hollow body 1 and consequently causes, in addition to the axial movements, axial rotation movements of the rotating element 9 and of the rod 3, said rotation movements changing the angular position of the latter with respect to the hollow body 1.

The change of the angular position of the rotating element 9 and of the rod 3, which is integral with the former with respect to the hollow body 1, causes a change also in the mutual cooperation between the stationary reference surfaces 11d of the stationary element 11 and the movable reference surfaces 9a of the rotating element 9. Following the rotation, the radial elements 9c are indeed brought to the grooves 11a (or 11b) adjacent to the grooves 11b (or 11a), with which they were aligned before the rotation movement. As a consequence and by virtue of the suitable radial extent of the radial elements 9c which is such as to enable them to be housed and slide in the deep grooves 11a, and of the symmetrical and alternate arrangement of the grooves 11a and 11b around the longitudinal axis, the movable reference surfaces 9a of the rotating element 9 alternatively cooperate once with the stationary reference surfaces 11d, at the entrance of the shallow grooves 11b, and once with the end 8b of the control element 8, when the radial elements 9c are housed in the deep grooves 11a and can slide therein. As already stated, the former case defines the axially advanced position of the rod 3 with respect to the hollow body 1, while the latter case defines the axially retracted position.

In the preferred embodiment, the number of grooves is twice the number of rotating elements 9a in order to enable the latter to cooperate with the deep grooves 11a and, alternatively, the movable reference surfaces 9a to abut the stationary reference surfaces 11d.

However, the number of the grooves 11a and 11b and of the radial elements 9c can vary with respect to what has been described, provided that there is the alternation of cooperation and non-cooperation between the movable reference surfaces 9a and the stationary reference surfaces 11d, and consequently there is the transition from the axially advanced position to the axially retracted position of the rod 3, or vice versa, at every actuation of the mechanism.

The grooves 11a, 11b and the radial elements 9c can be omitted and the axial movements of the various parts can be guided in different ways, per se known.

What enables the alternation of cooperation and non-cooperation between the movable reference surfaces 9a and the stationary reference surfaces 11d is their mutual arrangement. As the various stationary reference surfaces 11d and/or the corresponding movable reference surfaces 9a are arranged in a substantially symmetrical way around the longitudinal axis and the rod 3 changes its angular position every time an axial actuating thrust is applied, every axial actuating thrust followed by a subsequent release of such thrust corresponds to a transition from the axially advanced position to the axially retracted position, or vice versa.

During the transition from one position to the other, the oblique leading surfaces 11c contact surfaces of the radial elements 9c in order to help complete the rotation movement of the rotating element 9 and ease the correct entrance of said radial elements 9c alternatively into the deep grooves 11a and in the shallow grooves 11b through the respective entrance ends. When the radial elements 9c enter the shallow grooves 11b, the movable reference surfaces 9a are brought into contact with the stationary reference surfaces 11d.

The grooves 11a, 11b (more specifically, the deep grooves 11a in the preferred embodiment) are thus adapted to cooperate with the radial elements 9c of the rotating element 9 to guide the axial movements of the elongate element 3.

Also the protruding portions 8c of the control element 8 are housed and slide in the grooves 11a and 11b. Such protruding portions 8c are suitably dimensioned, in particular they have radial dimensions compatible with both the deep grooves 11a and the shallow grooves 11b.

The protruding portions 8c of the control element 8 are housed in the grooves 11a, 11b of the stationary element 11 and, in the non-operative condition of the rod 3 (figure 1), the movable reference surfaces 9a of the rotating element 9 abut, urged by the action of the spring 12, the stationary reference surfaces 11d and the rod 3 is locked in the axially advanced position with respect to the hollow body 1.

After the coupling has been inserted in the functional opening 55, which is substantially cylindrical shaped, of the component 50 to be checked, and the depth up to which the coupling sinks into the opening 50 has been defined and set, for example by means of a per se known external positioning system, an axial actuating thrust in a opposite sense with respect to the axial resisting thrust applied by the spring 12, is applied to the end 8a of the control element 8 to bring the coupling in the operative condition of figure 2. The protruding portions 8c of the control element 8 slide toward the lower part of the hollow body 1 until the shaped abutment surfaces 8d, facing the rotating element 9, touch and urge the rotating element 9 downward and cause the movable reference surfaces 9a to disengage from the stationary reference surfaces 11d, with which they continued to abut due to the action of the spring 12. Thanks to the cooperation between the shaped abutment surfaces 8d and the sloping abutment surfaces 9b integral with the rotating element 9, the rotating element 9 and the rod 3 are urged to rotate about the longitudinal axis with respect to the hollow body 1. Of course, the rod 3 undergoes also an advance movement causing a further compression of the spring 12. When the actuating thrust applied to the upper end 8a of the control element 8 ends, the resisting thrust applied by the spring 12, having a sense opposite with respect to the previously applied thrust, causes a retraction movement of the rod 3 toward the upper part of the hollow body 1 and causes the protruding portions 8c of the control element 8 to move back by sliding in the grooves 11a, 11b of the hollow body 1, followed by the radial element 9c of the rotating element 9. By virtue of the rotation that the rotating element 9 performs when disengaging from the stationary reference surfaces 11d, the radial elements 9c of the rotating element 9 enter in the deep grooves 11a with the help of the oblique leading surfaces 11c which complete the rotation movement. The protruding portions 8c of the control element 8 and the radial elements 9c of the rotating element 9 slide - the first ones urged by the second ones - inside the grooves 11a, 11b until the upper part of the protruding portions 8c of the control element 8 abuts against an upper internal wall 22 of the hollow body 1 and the axially retracted position of the rod 3 is thus defined. In consequence of the retraction movement of the rod 3 up to the axially retracted position, the stop surfaces 7 and 19, integral with the hollow body 1 and the lower end of the rod 3, respectively, are urged against each other, and the gasket 6 is compressed between the two surfaces 7 and 19. The compression of the gasket causes the latter to expand radially, that is to increase its diametric dimensions, and to engage the wall of the functional opening 55 of the component 50 to be checked. The seal is thus formed between the coupling and the component (figure 2).

In an example of embodiment of the present invention, the unexpanded gasket with an external diameter of 26 mm can reach, following the expansion, a diameter of about 32 mm. After the sealed connection is formed, the pressure test gas is introduced through the inlet hole 14. The gas enters the axial cavity 10 and, through the radial openings 15, passes into the axial through hole 4 of the rod 3, is discharged from the rod 3 and expands inside the component to be checked. Possible gas leakages due to leaks in the component 50 to be checked are detected in a per se known way which goes beyond the scope of the present invention. In order that the gasket 6 returns to the original dimensions and the sealed connection between the coupling and the component 50 to be checked is removed, that is to say the coupling returns to the non-operative condition, it is necessary and sufficient to apply again an axial thrust to the control element 8. The protruding portions 8c of the control element 8 which contact, under the resisting thrust of the spring 12, the radial elements 9c of the rotating element 9 at the grooves 11a, slide downward. When the radial elements 9c come out of the grooves 11a, the axial thrust applied by the shaped abutment surfaces 8d, integral with the control element 8, to the portions of the sloping abutment surfaces 9b, applies a momentum to the rotating element 9 which, as it is no longer constrained by the side walls of the grooves 11a, performs, together with the rod 3, a further rotation in the same direction as the previous rotation and consequently changes its angular position. The radial elements 9c tend to align with the grooves 11b, while the rod 3 undergoes a further advance movement that causes the stop surfaces 7 and 19 to displace away from each other and the spring 12 to compress further.

When the actuating thrust applied to the end 8a of the control element 8 is released, the rod 3 undergoes, under the thrust of the spring 12, a retraction movement toward the upper part of the hollow body 1 and the radial elements 9c engage, with the help of the oblique leading surfaces 11c, the entrance of the shallow grooves 11b, at which the contact between the movable reference surfaces 9a and the stationary reference surfaces 11d integral with the hollow body 1 occurs. This way the rod 3 resumes the axially advanced position (figure 1) in which the gasket 6 is not compressed by the stop surfaces 7 and 19 and the sealed connection between the coupling and the component 50 to be checked is removed.

By performing the same movement, that is by applying an axial thrust to the control element 8, it is possible to change the state of the coupling. In other words, it is possible to alternatively move from an operative condition, in which the sealing element 6 expands and the seal between the coupling and the component to be checked is formed, to a non-operative condition in which the sealing element 6 does not expand and the seal is removed, and vice versa. Moreover, as it is an actuating mechanism inside the coupling itself that enables the transition from the operative condition to the non-operative condition, and vice-versa, and the maintenance of such condition, the device according to the invention does not include movable external parts, such as levers, outside the overall transversal dimension of the hollow body 1, and thus provides advantages in compactness.

According to a different embodiment, which can be used for example when the functional opening 55 of the component 50 to be checked is defined by a substantially tubular portion, the rod 3 does not include a portion protruding from the overall longitudinal dimension of the hollow body 1. In that case, the hollow body 1 can include, at the lower end, a recess or seat adapted to house the part of the component to be checked, for example the substantially tubular portion with the functional opening 55 which engages the gasket 6 to form the sealed connection, and the end wall of such seat defines the first stop surface 7 for the gasket 6. The operation and the structure of the coupling do not change with respect to what has been hereinbefore described.

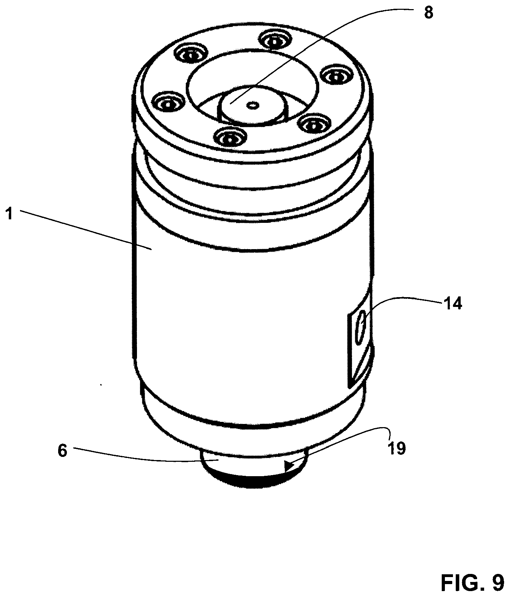

Figure 9 shows an embodiment of a sealed coupling device according to the present invention which is substantially identical to the one hereinbefore described; the only difference is in the absence of the washer 21. In that case, the axial actuating thrust is applied directly to the control element 8. More specifically, the thrust is applied to the upper end 8a of the control element 8 which, as shown in figure 9, is arranged in the central opening 2 of the hollow body in a slightly recessed position with respect to the walls of the hollow body 1. Thanks to the recessed arrangement, the control element 8 is, for the most part, within the overall longitudinal dimension of the hollow body even when the coupling is in the operative condition and is thus more protected against external impacts.

In the embodiment described in detail above, the rotating element 9 is a separated component which is fixed to the upper end of the rod 3 by means, for example, of a screw, but it can also be a portion of the elongate element itself, such as an end part, or a head, of the rod 3.

Also the stationary element 11 housed in the hollow body 1 can be omitted as separated component, and the stationary reference surfaces 11d and the grooves 11a and 11b can be defined, according to a different embodiment, in the opening 2 of the hollow body 1.

Unlike the above described embodiment in which the grooves 11a, 11b have different depth, the grooves can all have the same depth, with some of them including stationary reference surfaces 11d which extend transversely and being arranged alternately with respect to the other grooves. At defined angular positions of the rod 3, the stationary reference surfaces 11d, which extend transversely, abut the movable reference surfaces 9a of the rotating element 9 and prevent the radial element 9c of the latter to slide in the grooves. The axially advanced position of the rod 3 with respect to the hollow body 1 is so defined. For example, with reference to the solution shown in figure 6B, the guide section 11e can have the same depth as the grooves 11a, 11b, provided that there is an element that defines the stationary reference surface 11d.

In the preferred embodiment of the invention, the hollow body 1 is subdivided into an upper body and a lower body to facilitate assembly and maintenance operations. However, the hollow body 1 can consist of a single piece.

The sealed coupling device according to the embodiments shown in the figures forms the seal at an internal, substantially cylindrical shaped, wall of the component to be checked (the functional opening 55 in the embodiment shown and previously described). The end of the rod 3 carrying the sealing element 6 is indeed inserted into the component opening, such as the functional opening 55 shown in figure 2 (the insertion depth of the rod 3 is controlled by means of mechanic abutments not shown in the figures or, in case of use of robots, for example, by means of a controlled positioning system of the known type) and, once the actuating mechanism is activated, the sealing element 6 engages the internal wall of the component and the sealed connection is formed.

However, it is also possible to construct a device according to the present invention which forms the seal at an external wall of a component to be checked. In that case, an elongate element which corresponds functionally to the rod 3 of the figures but has proportionally larger diametrical dimensions, has a central through hole of suitable dimensions to enable the insertion of the portion, typically tubular shaped, of the component to be checked. The sealing element engages such portion of the component to be checked at an external, substantially cylindrical shaped wall. When the coupling moves to the operative condition, the sealing element, which is annular shaped in this case too, expands, like in the example described and shown above, not only by changing the external diametrical dimensions - as previously pointed out - but also by reducing, symmetrically, the diameter of the central opening (such reduction being a significant functional feature in this case.). As a consequence, the surface delimiting such central opening engages the external surface of the component and forms the seal.

## Claims

1. Sealed coupling device adapted to be connected to a component to be checked and to seal a substantially cylindrical surface of said component, the sealed coupling device including
- a hollow body (1) with a central axial opening (2) defining a longitudinal geometric axis and an inlet hole (14) connecting the outside to said central axial opening (2);
- an elongate element (3) at least partly housed in said opening (2) and adapted to perform axial movements with respect to said hollow body (1), the elongate element (3) defining an axial through hole (4) in communication with said central axial opening (2);
- conduits for the passage of a fluid into the component to be checked including said inlet hole (14) and said axial through hole (4);
- a sealing element (6) adapted to cooperate with said substantially cylindrical surface of the component to be checked;
- a thrust element (12) adapted to apply an axial resisting thrust between said hollow body (1) and said elongate element (3);
- an actuating mechanism (5) that can be operated from the outside of the hollow body (1) for transmitting an axial actuating thrust between said elongate element (3) and said hollow body (1), said axial actuating thrust featuring an opposite sense with respect to the axial resisting thrust; **characterized in that**
said sealing element (6) is arranged between two stop surfaces (7, 19) which are axially movable with respect to each other with said elongate element (3) and hollow body (1), respectively, said elongate element (3) is adapted to perform rotation movements about the longitudinal axis with respect to the hollow body (1) and to take different angular positions with respect to the hollow body (1),
said actuating mechanism (5) and said elongate element (3) comprising, respectively, first and second abutment surfaces (8d, 9b) adapted to mutually cooperate, the first and/or second abutment surfaces (8d,9b) being shaped in such a way that said axial actuating thrust applies a momentum between said elongate element (3) and said hollow body (1) adapted to cause said rotational movements, in addition to said axial movements, of the elongate element (3) and to change its angular position with respect to the hollow body (1),
the sealed coupling device also includes one or more stationary reference surfaces (11d) integral with the hollow body (1) and one or more movable reference surfaces (9a) integral with the elongate element (3), wherein said one or more stationary reference surfaces (11d) and said one or more movable reference surfaces (9a)
- are adapted to mutually cooperate under the action of said axial resisting thrust, in order to define at least one axial reference position of the elongate element (3) with respect to the hollow body (1),
- are arranged in defined radial positions around said longitudinal geometric axis, and
- are adapted to cooperate with each other at at least one of said angular positions of the elongate element with respect to the hollow body.

2. Device according to claim 1, wherein said two stop surfaces (7, 19) are substantially integral with said hollow body (1) and said elongate element (3), respectively.

3. Device according to claim 1 or claim 2, wherein said one or more stationary reference surfaces (11d) and one or more movable reference surfaces (9a) mutually cooperate in such a way as to define, under the action of the axial resisting thrust, at least one axially advanced position of the elongate element (3) with respect to the hollow body (1), the elongate element (3) being adapted to take at least one axially retracted position with respect to the hollow body (1) in which said two stop surfaces (7,19) are urged against each other by the action of said axial resisting thrust and the sealing element is compressed between said two stop surfaces (7,19) and radially expands to cooperate with said substantially cylindrical surface of the component to be checked.

4. Device according to claim 3, wherein said one or more stationary reference surfaces (11d) and/or one or more movable reference surfaces (9a) are arranged substantially symmetrically around the longitudinal axis, the elongate element (3) changing its angular position with respect to the hollow body (1) in such a way that a transition from said axially advanced position to said axially retracted position, or vice versa, corresponds to every axial actuating thrust followed by a subsequent release of said axial actuating thrust.

5. Device according to any one of claims 3 and 4, wherein said one or more stationary reference surfaces (11d) include at least one portion transverse to the longitudinal axis, the axially advanced position of the elongate element (3) being defined by the mutual cooperation between one or more movable reference surfaces (9a) of the elongate element (3) and said at least one transverse portion of said one or more stationary reference surfaces (11d).

6. Device according to any one of the preceding claims, wherein said one or more stationary reference surfaces (11d) are defined at the opening (2) of the hollow body (1).

7. Device according to any one of the preceding claims, comprising longitudinal guide surfaces, which are integral with the hollow body and define longitudinal grooves (11a, 11b).

8. Device according to claim 7, wherein said one or more reference surfaces (11d) are defined at at least one (11b) of said longitudinal grooves which has at least a part having reduced depth.

9. Device according to any one of the preceding claims, including at least one radial element (9c) integral with the elongate element (3) that defines one out of said one or more movable reference surfaces (9a) and said second abutment surfaces (9b).

10. Device according to claim 9 as dependent on claim 7 or claim 8, wherein said longitudinal grooves (11a, 11b) are adapted to cooperate with said at least one radial element (9c) to guide the axial movements of the elongate element (3) with respect to the hollow body (1).

11. Device according to claim 10, wherein at least one of said longitudinal grooves (11a, 11b) includes an open end with an oblique leading surface (11c) adapted to ease the entrance of said at least one radial element (9c) through said open end.

12. Device according to claim 10 or claim 11, wherein the number of the longitudinal grooves (11a, 11b) is twice the number of the radial elements (9c).

13. Device according to any one of the preceding claims, wherein the actuating mechanism (5) includes a control element (8) that is at least partially housed in the hollow body (1) and axially movable, said control element (8) defining said first abutment surfaces (8d) and being adapted to transmit the axial actuating thrust to the rotating element (3).

14. Device according to claim 13, wherein the first abutment surfaces (8d) have a curved or sloping profile.

15. Device according to any one of the preceding claims, wherein the second abutment surfaces (9b) include sloping portions with respect to the longitudinal axis.

16. Device according to any one of the preceding claims, wherein the elongate element (3) defines radial openings (15) at one end of the axial through hole (4).

## Patentansprüche

1. Schweißbare Kupplungsvorrichtung, die darauf ausgelegt ist, mit einer zu prüfenden Komponente verbunden zu werden und eine im Wesentlichen zylindrische Fläche der genannten Komponente abzudichten, wobei die abgedichtete Kupplungsvorrichtung folgendes beinhaltet:
- einen Hohlkörper (1) mit einer zentralen Achsenöffnung (2), die eine
geometrische Längsachse definiert, und eine Einlassöffnung (14), die die Außenseite mit der Öffnung der zentralen Achse (2) verbindet;
- ein längliches Element (3), das zumindest teilweise in der Öffnung (2) untergebracht ist, um axiale Bewegungen in Bezug auf den Hohlkörper (1) auszuführen, wobei das längliche Element (3) eine axiale Durchgangsöffnung (4) definiert, die mit der zentralen axialen Öffnung (2) in Verbindung steht;
- Leitungen für den Durchgang eines Fluids in das zu überprüfende Bauteil einschließlich der Einlassöffnung (14) und der axialen Durchgangsöffnung (4);
- ein Dichtungselement (6), das darauf ausgelegt ist, mit der im Wesentlichen zylindrischen Oberfläche des zu überprüfenden Bauteils zusammenzuwirken;
- ein Schubelement (12), das angepasst ist, um einen axialen Widerstand zwischen dem Hohlkörper (1) und dem länglichen Element (3) auszuüben;
- einen Betätigungsmechanismus (5), der von der Außenseite des Hohlkörpers aus betätigt werden kann, (1) um einen axialen Betätigungsdruck zwischen dem länglichen Element (3) und dem Hohlkörper (1) zu übertragen, wobei der axiale Betätigungsdruck in entgegengesetzter Richtung zum axialen Widerstandsschub wirkt; **dadurch gekennzeichnet, dass**
das Dichtungselement (6) zwischen zwei Anschlagflächen (7,19) angeordnet ist, die in Bezug zueinander mit dem länglichen Element (3) bzw. dem Hohlkörper (1) axial bewegbar sind, wobei das längliche Element (3)Drehbewegungen um die Längsachse in Bezug auf den Hohlkörper (1) ausführen und verschiedene Winkelpositionen in Bezug auf den Hohlkörper (1) einnehmen kann, wobei der Betätigungsmechanismus (5) und das längliche Element (3) jeweils erste und zweite Anschlagflächen (8d, 9b) umfassen, die auf wechselseitige Zusammenarbeit ausgelegt sind, wobei die ersten und/oder zweiten Anschlagflächen (8d, 9b) derart geformt sind, dass der axiale Betätigungsdruck einen Impuls zwischen dem länglichen Element (3) und dem Hohlkörper (1) anlegt, um die Drehbewegungen des länglichen Elements (3) zusätzlich zu den axialen Bewegungen zu bewirken und seine Winkelposition in Bezug auf den Hohlkörper (1) zu ändern,
die abgedichtete Kupplungsvorrichtung enthält auch eine oder mehrere stationäre Bezugsflächen (11d), die integral mit dem Hohlkörper (1) sind, und eine oder mehrere bewegliche Bezugsflächen (9a), die einstückig mit dem länglichen Element (3) ausgebildet sind, wobei die eine oder die mehreren stationären Bezugsflächen (11d) und eine oder mehrere bewegliche Bezugsflächen (9a)
- auf wechselseitige Zusammenarbeit unter der Wirkung des axialen Widerstandsschubs ausgelegt sind, um mindestens eine axiale Bezugsposition des länglichen Elements (3) in Bezug auf den Hohlkörper (1) zu definieren,
- in definierten radialen Positionen um die geometrische Längsachse angeordnet sind, und
- so eingerichtet sind, dass sie bei mindestens einer der Winkelpositionen des länglichen Elements in Bezug auf den Hohlkörper miteinander zusammenwirken.

2. Vorrichtung nach Anspruch 1, bei der die zwei Anschlagflächen (7, 19) im Wesentlichen einstückig mit dem Hohlkörper (1) bzw. dem länglichen Element (3) sind.

3. Vorrichtung nach Anspruch 1 oder Anspruch 2, wobei die eine oder die mehreren stationären Bezugsflächen (11d) und eine oder mehrere bewegliche Bezugsflächen (9a) derart zusammenwirken, dass sie unter der Wirkung des axialen Widerstandsschubs mindestens eine axial vorgeschobene Position des länglichen Elements (3) in Bezug auf den Hohlkörper (1) definieren, wobei das längliche Element (3) so ausgerichtet ist, zumindest eine axial zurückgezogene Position in Bezug auf den Hohlkörper (1) einzunehmen, in der die zwei Anschlagflächen (7, 19) durch die Wirkung des axialen Widerstandsschubs gegeneinander gedrückt werden, und das Dichtelement zwischen den zwei Anschlagflächen (7, 19) zusammengedrückt ist und sich radial ausdehnt, um mit der im Wesentlichen zylindrischen Fläche der zu prüfenden Komponente zusammenzuwirken.

4. Vorrichtung nach Anspruch 3, wobei die eine oder die mehreren stationären Bezugsflächen (11d) und/oder eine oder mehrere bewegliche Bezugsflächen (9a) im Wesentlichen symmetrisch um die Längsachse angeordnet sind, wobei das längliche Element (3) seine Winkelposition in Bezug zu dem Hohlkörper (1) derart ändert, dass ein Übergang von der axial vorgeschobenen Position in die axial zurückgezogene Position, oder umgekehrt, jedem axialen Betätigungsschub gefolgt von einem nachfolgenden Lösen des axialen Betätigungsschubs entspricht.

5. Vorrichtung nach einem der Ansprüche 3 und 4, wobei die genannte oder mehrere stationäre Bezugsflächen (11d) mindestens einen quer zur Längsachse verlaufenden Abschnitt aufweisen, wobei die axial vorgeschobene Position des länglichen Elements (3) durch das gegenseitige Zusammenwirken zwischen einer oder mehreren beweglichen Bezugsflächen (9a) des länglichen Elements (3) und mindestens einem Querabschnitt der einen oder mehreren stationären Bezugsflächen (11d) definiert ist.

6. Vorrichtung nach einem der vorhergehenden Ansprüche, wobei die genannte oder mehrere stationäre Bezugsflächen (11d) an der Öffnung (2) des Hohlkörpers (1) definiert sind.

7. Vorrichtung nach einem der vorhergehenden Ansprüche, umfassend Längsführungsflächen, die einstückig mit dem Hohlkörper sind und Längsnuten (11a, 11b) definieren.

8. Vorrichtung nach Anspruch 7, wobei eine oder mehrere Bezugsflächen (11d) an mindestens einer (11b) der Längsnuten definiert sind, die mindestens einen Teil mit verringerter Tiefe aufweisen,

9. Vorrichtung nach einem der vorhergehenden Ansprüche, einschließlich mindestens eines radialen Elements (9c), das einstückig mit dem länglichen Element (3) ausgebildet ist, das eine der genannten oder mehreren beweglichen Bezugsflächen (9a) und der zweiten Anschlagflächen (9b) definiert.

10. Vorrichtung nach Anspruch 9 in Abhängigkeit von Anspruch 7 oder Anspruch 8, wobei die Längsnuten (11a, 11b) dazu ausgelegt sind, mit wenigstens einem radialen Element (9c) zusammenzuwirken, um die axialen Bewegungen des länglichen Elements (3) in Bezug auf den Hohlkörper (1) zu führen.

11. Vorrichtung nach Anspruch 10, bei der mindestens eine der Längsnuten (11a, 11b) ein offenes Ende mit einer schrägen Führungsfläche (11c) aufweist, die den Eintritt mindestens eines radialen Elements (9c) durch das offene Ende erleichtern soll.

12. Vorrichtung nach Anspruch 10 oder 11, wobei die Anzahl der Längsnuten (11a, 11b) doppelt so groß ist wie die Anzahl der Radialelemente (9c).

13. Vorrichtung nach einem der vorhergehenden Ansprüche, wobei der Betätigungsmechanismus (5) ein Steuerelement (8) beinhaltet, das zumindest teilweise in dem Hohlkörper (1) untergebracht und axial beweglich ist, wobei das Steuerelement (8) die erste Anschlagflächen (8d) definiert und an die Übertragung des axialen Betätigungsschubs auf das rotierende Element (3) angepasst ist.

14. Vorrichtung nach Anspruch 13, wobei die ersten Anschlagflächen (8d) ein gekrümmtes oder abfallendes Profil aufweisen.

15. Vorrichtung nach einem der vorhergehenden Ansprüche, bei der die zweiten Anschlagflächen (9b) gegenüber der Längsachse geneigte Abschnitte aufweisen.

16. Vorrichtung nach einem der vorhergehenden Ansprüche, wobei das längliche Element (3) radiale Öffnungen (15) an einem Ende der axialen Durchgangsöffnung (4) definiert.

## Revendications

1. Dispositif de raccordement scellé adapté pour être relié à un composant à contrôler et pour sceller une surface substantiellement cylindrique dudit composant, le dispositif de raccordement comprenant
- un corps creux (1) avec une ouverture
axiale centrale (2) définissant un axe longitudinal géométrique et un orifice d'entrée (14) reliant l'extérieur à ladite ouverture axiale centrale (2) ;
- un élément allongé (3) au moins partiellement logé dans ladite ouverture (2) et adapté pour effectuer des mouvements axiaux par rapport audit corps creux (1), l'élément allongé (3) définissant un orifice axial (4) en communication avec ladite ouverture axiale centrale (2) ;
- des conduits pour le passage d'un fluide dans le composant à contrôler comprenant ledit orifice d'entrée (14) et ledit orifice axial (4) ;
- un élément de d'étanchéité (6) adapté pour être en contact avec ladite surface substantiellement cylindrique du composant à contrôler ;
- un élément de poussée (12) adapté pour exercer une poussée axiale résistante entre ledit corps creux (1) et ledit élément allongé (3) ;
- un mécanisme de commande (5) pouvant fonctionner de l'extérieur du corps creux (1) pour envoyer une poussée de commande axiale entre ledit élément allongé (3) et ledit corps creux (1), la poussée de commande axiale présentant un sens opposé par rapport à la poussée axiale résistante ;
**caractérisé en ce que**
ledit élément d'étanchéité (6) est disposé entre deux surfaces d'arrêt (7,19), axialement amovibles par rapport aux autres, avec ledit élément allongé (3) et le corps creux (1), respectivement, ledit élément allongé (3) est adapté pour effectuer des mouvements de rotation autour de l'axe longitudinal par rapport au corps creux (1) et pour avoir des positions angulaires différentes par rapport au corps creux (1),
ledit mécanisme de commande (5) et ledit élément allongé (3) comprenant respectivement une première et une deuxième surface de butée (8d,9b), adaptées pour coopérer mutuellement, la première et/ou la deuxième surface de butée (8d,9b) étant façonnées de telle sorte que ladite poussée de commande axiale exerce un moment entre ledit élément allongé (3) et ledit corps creux (1), adapté pour déclencher lesdits mouvements de rotation, outre lesdits mouvements axiaux, de l'élément allongé (3) et pour modifier sa position angulaire par rapport au corps creux (1),
le dispositif de raccordement scellé comprend également une ou plusieurs surfaces de référence fixes (11d) d'un seul tenant avec le corps creux (1) et une ou plusieurs surfaces de référence amovibles (9a) d'un seul tenant avec l'élément allongé (3), dans lesquelles ladite ou lesdites surfaces de référence fixes (11d) et ladite ou lesdites surfaces de référence amovibles (9a)
- sont adaptées pour coopérer mutuellement, sous l'action de la poussée axiale résistante, afin de définir au moins une position de référence axiale de l'élément allongé (3) par rapport au corps creux (1),
- sont disposées en positions radiales définies autour dudit axe géométrique longitudinal et
- sont adaptées pour coopérer mutuellementau moins au niveau de l'une desdites positions angulaires de l'élément allongé, par rapport au corps creux.

2. Dispositif selon la revendication 1, dans lequel lesdites deux surfaces d'arrêt (7,19) sont substantiellement d'un seul tenant avec ledit corps creux (1) et ledit élément allongé (3), respectivement.

3. Dispositif selon la revendication 1 ou 2, dans lequel ladite ou lesdites surfaces de référence fixes (11d) et ladite ou lesdites
surfaces de référence amovibles (9a) coopèrent mutuellement, de façon à définir, sous l'action de la poussée axiale résistante, au moins une position avancée axialement de l'élément allongé (3) par rapport au corps creux (1), l'élément allongé (3) étant adapté pour avoir au moins une position axialement rétractée par rapport au corps creux (1), dans laquelle lesdites deux surfaces d'arrêt (7,19) exercent une pression l'une contre l'autre par l'action de ladite poussée axiale résistante et l'élément d'étanchéité est comprimé entre lesdites deux surfaces d'arrêt (7,19) et s'étend radialement pour coopérer avec ladite surface substantiellement cylindrique du composant à contrôler.

4. Dispositif selon la revendication 3, dans lequel ladite ou lesdites surfaces de référence fixes (11d) et/ou une ou plusieurs surfaces de référence amovibles (9a) sont disposées substantiellement symétriquement autour de l'axe longitudinal, l'élément allongé (3) modifiant sa position angulaire par rapport au corps creux (1) de telle sorte qu'une transition de ladite position axialement avancée vers ladite position axialement rétractée, ou inversement, corresponde à chaque poussée de commande axiale, suivie par un relâchement successif de ladite poussée de commande axiale.

5. Dispositif selon l'une des revendications 3 et 4, dans lequel ladite ou lesdites surfaces de référence fixes (11d) comprennent au moins une partie transversale à l'axe longitudinal, la position axialement avancée de l'élément allongé (3) étant définie par la coopération mutuelle entre une ou plusieurs surfaces de référence amovibles (9a) de l'élément allongé (3) et ladite au moins une partie transversale de ladite ou desdites surfaces de référence fixes (11d).

6. Dispositif selon l'une des revendications précédentes, dans lequel ladite ou lesdites surfaces de référence fixes (11d) sont définies à l'ouverture (2) du corps creux (1).

7. Dispositif selon l'une des revendications précédentes comprenant des surfaces de guidage longitudinales, d'un seul tenant avec le corps creux et définissant des rainures longitudinales (11a, 11b) .

8. Dispositif selon la revendication 7, dans lequel ladite ou lesdites surfaces de référence (11d) sont définies (11b) au niveau d'au moins une desdites rainures longitudinales, ayant au moins une pièce avec une profondeur réduite.

9. Dispositif selon l'une des revendications précédentes, comprenant au moins une élément radial (9c) d'un seul tenant avec l'élément allongé (3) définissant une de ladite ou desdites surfaces de référence amovibles (9a) et lesdites deuxièmes surfaces de butée (9b) .

10. Dispositif selon la revendication 9, dépendant de la revendication 7 ou de la revendication 8, dans lequel lesdites rainures longitudinales (11a, 11b) sont adaptées pour coopérer avec ledit au moins un élément radial (9c), pour guider les mouvements axiaux de l'élément allongé (3) par rapport au corps creux (1).

11. Dispositif selon la revendication 10, dans lequel au moins une desdites rainures longitudinales (11a, 11b) comprend une extrémité ouverte avec une surface d'entrée oblique (11c) adaptée pour faciliter l'entrée dudit au moins un élément radial (9c) à travers ladite extrémité ouverte.

12. Dispositif selon la revendication 10 ou la revendication 11, dans lequel le nombre de rainures longitudinales (11a, 11b) correspond au double du nombre d'éléments radiaux (9c).

13. Dispositif selon l'une des revendications précédentes dans lequel le mécanisme de commande (5) comprend un élément de commande (8) partiellement logé dans le corps creux (1) et amovible axialement, ledit élément de commande (8) définissant lesdites premières surfaces de butée (8d) et étant adapté pour transmettre ladite poussée de commande axiale à l'élément rotatif (3).

14. Dispositif selon la revendication 13, dans lequel les premières surfaces de butée (8d) ont un profil courbé ou incliné.

15. Dispositif selon l'une des revendications précédentes, dans lequel les deuxièmes surfaces de butée (9b) comprennent des parties inclinées par rapport à l'axe longitudinal.

16. Dispositif selon l'une des revendications précédentes, dans lequel l'élément allongé (3) définit des ouvertures radiales (15) à l'une des extrémités de l'orifice axial (4).
